# EUROPEAN PATENT APPLICATION

(11) **EP 4 821 902 A1**
(43) Date of publication of application: **14.10.2026**
(21) Application number: 24899318.0
(22) Date of filing: 09.08.2024
(51) Int. Cl.: C03C 25/465, C03C 25/40

(54) **GLASS FIBER SURFACE TREATMENT AGENT AND PREPARATION METHOD THEREFOR, GLASS FIBER AND USE**

(30) Priority: 04.12.2023 CN 202311643135
(71) Applicant: Jushi Group Co., Ltd., Tongxiang, Zhejiang 314500 (CN)
(72) Inventor: XU, Shengjie, Tongxiang, Zhejiang 314500 (CN); YANG, Guoming, Tongxiang, Zhejiang 314500 (CN); SONG, Changjiu, Tongxiang, Zhejiang 314500 (CN); LU, Yahui, Tongxiang, Zhejiang 314500 (CN); ZHONG, Hongqiang, Tongxiang, Zhejiang 314500 (CN); ZHOU, Xianwang, Tongxiang, Zhejiang 314500 (CN)
(74) Representative: Michalski Hüttermann & Partner mbB
(86) International application number: PCT/CN2024/110941
(87) International publication number: WO 2025/118669

(57) **Abstract**

The present application provides a glass fiber surface treatment agent and a preparation method therefor, a glass fiber, and a use. The glass fiber surface treatment agent includes effective components and water, the effective components accounting for 4.6~10.3% of the weight percentage of the glass fiber surface treatment agent; and based on the weight percentage of the effective components, the effective components include: 6.3~19.6% of a silane coupling agent, 1.8~5.9% of a surfactant, 3.4~7.8% of a lubricant, 60.7~84.8% of a film-forming agent, and 2.9~6.4% of an auxiliary agent, the film-forming agent is an acrylic-modified polyester resin and/or a silicone-modified polyester resin. Glass fibers produced by means of the glass fiber surface treatment agent of the present application has excellent use smoothness and mechanical properties of fiberglass-reinforced plastic and meets various use requirements of food grade fiberglass-reinforced plastic containers.

## Description

The present application claims priority to Chinese Patent Application No. 202311643135.5 filed on December 04, 2023 and entitled "GLASS FIBER SURFACE TREATMENT AGENT AND PREPARATION METHOD THEREFOR, GLASS FIBER AND USE", the disclosure of which is incorporated herein by reference in its entirety.

### Technical Field

The present disclosure relates to the technical field of glass fiber reinforced composite materials, specifically, it relates to a glass fiber surface treatment agent and preparation method therefor, glass fiber and use, in particular, use of glass fiber in the field of food grade fiberglass reinforced plastic (FRP) container products.

### Background

Food safety has always been a hot topic of social concern. In recent years, food safety incidents have occurred frequently, more and more people have begun to pay attention to food safety issues, and governments around the world have also actively taken measures to respond. Considering that the supply chain is the first barrier to avoid and reduce food safety risks, as one of the important systems to ensure food safety, food safety testing institutions play an important role in preventing food safety risks. ACS is a French health certification agency, whose full name is Academia constiintei de sine, which formulated corresponding safety and health standards for products and materials such as metal, glass and ceramic mainly according to the standards issued by AFNOR (Association Francaise de Normalisation). Among them, toxicity test is used to detect whether heavy metals, softeners, stabilizers and other substances are released from materials and products when placed in water, and organic test is used to detect the characteristics of affect materials, including indicators such as the taste, smell and color of the water quality after the products come into contact with drinking water. It is a globally authoritative testing and certification agency in the field of food contact pipelines and pressure vessels.

With the continuous emergence of new technologies, new materials and new processes, the material of water supply pipelines has also been continuously updated. FRP container is increasingly favored by the market because of its characteristics of corrosion resistance, light weight, high strength, convenient transportation and installation, small friction coefficient and strong conveying capacity. It undoubtedly has great advantages, especially when used in sewage transportation and water intake projects in water supply projects. However, the distribution pipelines for urban water supply are not yet mature enough at present, so FRP products and their raw materials in this field must meet the ACS test certification requirements, so as to prevent microcracks in FRP containers caused by irresistible factors, which could lead to the release of some compounds in water, affecting water quality and ultimately causing harm to human health. Especially for glass fiber raw materials, there are currently no products on the market that can meet the above requirements, which restricts the development of the FRP container industry.

The food grade FRP container has broad application prospects and can be applied to the food industry, pharmaceutical industry and other fields. In the food industry, food grade FRP container can replace traditional metal pipelines to achieve safety, hygiene, and economic benefits in beverage and food transportation. In the pharmaceutical industry, FRP container has advantages such as non-toxicity and hygiene and can be used for the transportation of pharmaceuticals and biological agents. Thus, the market urgently needs a glass fiber that meets the requirements of ACS test certification, and has excellent use smoothness and FRP mechanical properties, meets the requirements of urban water supply transmission and distribution pipelines, and promotes the high-quality development of the FRP pressure vessel industry.

### Summary

The objective of the present disclosure is to provide a glass fiber surface treatment agent and preparation method therefor, glass fiber and use. The glass fiber surface treatment agent of the present disclosure is safe and reliable, and the glass fiber prepared by it has excellent use smoothness and mechanical properties of FRP.

In order to achieve the above objective, according to the first aspect of the present disclosure, a glass fiber surface treatment agent is provided. The glass fiber surface treatment agent includes effective components and water, the effective components accounting for 4.6~10.3% of the weight percentage of the glass fiber surface treatment agent; and based on the weight percentage of the effective components, the effective components include: 6.3~19.6% of a silane coupling agent, 1.8~5.9% of a surfactant, 3.4~7.8% of a lubricant, 60.7~84.8% of a film-forming agent, and 2.9~6.4% of an auxiliary agent; the film-forming agent is an acrylic-modified polyester resin and/or silicone-modified polyester resin.

Preferably, the acrylic-modified polyester resin includes: a water-based acrylic-modified saturated polyester resin and/or a water-based acrylic-modified unsaturated polyester resin; the relative weight average molecular weight of the acrylic-modified polyester resin is 3000~5000.

Preferably, the silicone-modified polyester resin includes: a silicone-modified saturated polyester resin and/or a silicone-modified unsaturated polyester resin; the relative weight average molecular weight of the silicone-modified polyester resin is 2000~4000.

Preferably, the film-forming agent is a mixture of acrylic-modified polyester resin and silicone-modified polyester resin, a mass ratio of the acrylic-modified polyester resin to the silicone-modified polyester resin is 1:3~6:1.

Preferably, the surfactant is one or more of a polyethylene oxide surfactant, an ethoxylate surfactant, and an alkyne diol modified surfactant.

Preferably, the silane coupling agent is an acyloxy-containing silane coupling agent and/or an amino-containing silane coupling agent;
when the silane coupling agent is acyloxy-containing silane coupling agent and amino-containing silane coupling agent, a mass ratio of the acyloxy-containing silane coupling agent to the amino-containing silane coupling agent is 1:1~8:1.

Preferably, the silane coupling agent is an acyloxy-containing low-VOC silane coupling agent and/or an amino-containing low-VOC silane coupling agent.

Preferably, the lubricant is one or more of a fatty acid, a fatty alcohol, a fatty acid ester, and a fatty acid triglyceride.

Preferably, the auxiliary agent is a citric acid and/or an acetic acid.

In order to achieve the above objective, according to the second aspect of the present disclosure, a preparation method of the glass fiber surface treatment agent as described in the first aspect is provided, which includes: mixing an auxiliary agent, a silane coupling agent, a surfactant, a lubricant, a film-forming agent and water to obtain the glass fiber surface treatment agent.

According to the third aspect of the present disclosure, a glass fiber treated by the glass fiber surface treatment agent prepared by the preparation method of the second aspect is provided.

According to the fourth aspect of the present disclosure, use of the glass fiber of the third aspect in the field of food grade fiberglass-reinforced plastic container products is provided.

Applying the technical solution of the present disclosure, a glass fiber surface treatment agent comprising a silane coupling agent, a surfactant, a lubricant, a film-forming agent, an auxiliary agent, and water is provided. The silane coupling agent and the film-forming agent are the main components of the glass fiber surface treatment agent of the present disclosure. The silane coupling agent mainly plays a role in repairing microcracks on the surface of fiber, which can form an effective and continuous protective layer on the surface of the glass fiber, improve the processing technology and the physical and mechanical strength of the composite material. The film-forming agent mainly plays a role in improving the integrity, weather resistance and improving the compatibility with reinforcing resins of the glass fiber and the physical and mechanical strength of composite materials. Compared with other types of film-forming agent such as epoxy resin, the greatest advantage of the acrylic-modified polyester resin and silicone-modified polyester resin selected in the present disclosure is that they do not contain substances harmful to the human body such as ethylene oxide, and have stronger adhesion on the fiber surface, so that the glass fiber has excellent integrity, flexibility, weather resistance and water resistance, and at the same time has good compatibility with food grade unsaturated polyester resin and excellent solvent resistance, which can meet the performance requirements of food grade pipes. It has been found through experiments that by combining the silane coupling agent, the surfactant, the lubricant, the film-forming agent, the auxiliary agent and water in the proportion of the present disclosure to obtain the glass fiber surface treatment agent, and applying it to glass fiber, the wear resistance, integrity of the glass fiber and the mechanical properties of FRP are significantly better than those of glass fibers treated with other glass fiber surface treatment agents.

### Detailed Description

In order to make the objectives, technical solutions and advantages of the embodiments of the present disclosure clearer, the following will provide a clear and complete description of the technical solution of the present disclosure in conjunction with the specific embodiments. Apparently, the described examples are some rather than all of the examples of the present disclosure. All other examples obtained by those of ordinary skill in the art based on the examples of the present disclosure without creative efforts should fall within the protection scope of the present disclosure. It should be noted that without conflict, the examples in this disclosure and features in the examples may be combined with each other.

Some embodiments of the present disclosure provide a glass fiber surface treatment agent, including effective components and water, the effective components accounting for 4.6~10.3% of the weight percentage of the glass fiber surface treatment agent; and based on the weight percentage of the effective components, the effective components include: 6.3~19.6% of a silane coupling agent, 1.8~5.9% of a surfactant, 3.4~7.8% of a lubricant, 60.7~84.8% of a film-forming agent, and 2.9~6.4% of an auxiliary agent; the film-forming agent is an acrylic-modified polyester resin and/or a silicone modified polyester resin.

The glass fiber surface treatment agent of the present disclosure includes a silane coupling agent, a surfactant, a lubricant, a film-forming agent, an auxiliary agent, and water. The silane coupling agent and the film-forming agent are the main components of the glass fiber surface treatment agent of the present disclosure. The silane coupling agent mainly plays a role in repairing microcracks on the surface of fiber, which can form an effective and continuous protective layer on the surface of the glass fiber, improve the processing technology, and improve the physical and mechanical strength of the composite material. The film-forming agent mainly plays a role in improving the integrity and weather resistance, compatibility with reinforcing resins of the glass fiber, and the physical and mechanical strength of the composite material. Compared with other types of film-forming agent such as epoxy resin, the greatest advantage of the acrylic-modified polyester resin and silicone-modified polyester resin selected in the present disclosure is that they do not contain substances harmful to the human body such as ethylene oxide, and have stronger adhesion on the fiber surface, so that the glass fiber has excellent integrity, flexibility, weather resistance and water resistance, and at the same time has good compatibility with food grade unsaturated polyester resin and excellent solvent resistance, which can meet the performance requirements of food grade pipes. It has been found through experiments that by combining a silane coupling agent, a surfactant, a lubricant, a film-forming agent, an auxiliary agent and water in the proportion of the present disclosure to prepare a glass fiber surface treatment agent, and applying it to glass fiber, the wear resistance, integrity of the glass fiber and the mechanical properties of FRP are significantly better than those of glass fibers treated with other glass fiber surface treatment agents.

In some preferred embodiments, a glass fiber surface treatment agent includes effective components and water, the effective components accounting for 5.2~9.8% of the weight percentage of the glass fiber surface treatment agent; and based on the weight percentage of the effective components, the effective components include: 7.9~18.2% of a silane coupling agent, 2.8~5.1% of a surfactant, 4.2~6.9% of a lubricant, 62.1~80.5% of a film-forming agent, and 3.8~5.9% of an auxiliary agent; the film-forming agent is an acrylic-modified polyester resin and/or a silicone modified polyester resin.

In the present disclosure, the film-forming agent is an acrylic-modified polyester resin and/or a silicone-modified polyester resin, which mainly plays a role in improving the integrity and weather resistance, compatibility with reinforcing resins of the glass fiber, and the physical and mechanical strength of the composite material. It has been found through experiments that the appropriate amount of the film-forming agent is 60.7~84.8%. In some preferred embodiments, the amount of the film-forming agent is preferably 62.1~80.5%, and more preferably 64~78%, which can further improve the performance of the glass fiber surface treatment agent.

In some preferred embodiments, the acrylic-modified polyester resin includes: a water-based acrylic-modified saturated polyester resin and/or a water-based acrylic-modified unsaturated polyester resin. Preferably, the acrylic-modified polyester resin is water-based acrylic-modified unsaturated polyester resin. Preferably, the relative weight average molecular weight of the acrylic-modified polyester resin is 3000~5000. The application of the glass fiber surface treatment agent containing the above preferred acrylic-modified polyester resin is more conducive to obtaining glass fiber with excellent integrity, salt spray resistance, steam resistance, weather resistance, chemical resistance, and solvent resistance.

In some preferred embodiments, the silicone modified polyester resin includes a silicone-modified saturated polyester resin and/or a silicone-modified unsaturated polyester resin. Preferably, the silicone-modified polyester resin includes a silicone-modified polyester resin prepared by condensation dehydration reaction of siloxane containing SiOH and polyester resin containing hydroxyl, and/or a silicone-modified polyester resin prepared by condensation dealcoholization reaction of siloxane containing SiOR and polyester resin containing hydroxyl. Preferably, the silicone-modified polyester resin is a silicone-modified saturated polyester resin. Preferably, the relative weight average molecular weight of the silicone-modified polyester resin is 2000~4000. The application of the glass fiber surface treatment agent containing the above preferred silicone-modified polyester resin is more conducive to obtaining glass fiber with excellent flexibility, heat resistance, weather resistance, corrosion resistance, electrical insulation, and bending resistance.

In some preferred embodiments, when the film-forming agent is an acrylic-modified polyester resin, the film-forming agent accounts for 75~84.8% of the weight percentage of the effective components; or, when the film-forming agent is a silicone-modified polyester resin, the film-forming agent accounts for 67~76% of the weight percentage of the effective components; or, when the film-forming agent is a mixture of acrylic-modified polyester resin and silicone-modified polyester resin, the film-forming agent accounts for 60.7~72% of the weight percentage of the effective components. According to the above ratio, it is more conducive to improving the performance of the glass fiber surface treatment agent.

In some preferred embodiments, the film-forming agent is a mixture of acrylic-modified polyester resin and silicone-modified polyester resin, and the mass ratio of the acrylic-modified polyester resin to the silicone-modified polyester resin is 1:3-6:1. Preferably, the mass ratio of the acrylic-modified polyester resin to the silicone-modified polyester resin is 1:2~5:1. In some specific embodiments, the mass ratio of the acrylic-modified polyester resin to the silicone-modified polyester resin is 1:2~5.63:1. By way of example, the mass ratio of the acrylic-modified polyester resin to the silicone-modified polyester resin is 1:2, 1:1, 2:1, 3:1, 4:1, 5:1, 1:1.17, 1.99:1, 1.41:1, 1:1.94, 1:1.62, 1.23:1, 5.63:1. In the present disclosure, the combination of the acrylic-modified polyester resin and the silicone-modified polyester resin plays a complementary and enhancing role in performance. Acrylic-modified polyester resin, due to its excellent integrity, should not be used in high amount, otherwise, it will lead to overly good integrity of the strand, making it difficult to disperse and reducing the penetration speed in the resin, which will affect the appearance and mechanical properties of FRP products. However, it should not be used in low amount either, otherwise the strand integrity will be poor, and the use smoothness will not be good, affecting the production efficiency. Similarly, the silicone-modified polyester resin can endow strands with excellent flexibility, but its integrity is average. Therefore, high amount of the silicone-modified polyester resin will cause the strand to be soft and easily dispersed, which is not conducive to the winding and forming process. Conversely, if the amount of the silicone-modified polyester resin used is too low, it will lead to excessive use of acrylic-modified polyester resin, resulting in the strand being hard, lacking flexibility and reprocessability. Practical experience shows that within the above preferred proportion range, glass fiber product that meet the requirements of production and processing technology and can be used to prepare FRP products with excellent appearance and mechanical properties can be obtained.

In some preferred embodiments, the surfactant is one or more of a polyethylene oxide surfactant, an ethoxylate surfactant, and an alkyne diol modified surfactant. Preferably, the surfactant is one or more of an ethoxylate surfactant and an alkyne diol modified surfactant. In the present disclosure, the mechanism of action of the surfactant is to reduce the surface tension of the glass fiber surface treatment agent solution by using its own polar groups such as -OH and -O- (i.e., hydrophilic groups), making it easier for the glass fiber surface treatment agent to wet the glass fiber when in contact with it, and enhancing the adsorption performance of the glass fiber surface treatment agent on the glass fiber surface, and thus making it easier to be evenly coated on the glass fiber surface. The surfactant in the present disclosure selects one or more of a polyethylene oxide surfactant, an ethoxylate surfactant, and an alkyne diol modified surfactant, which can reduce the surface tension of the glass fiber, improve the uniformity of the coating of the glass fiber surface treatment agent on the glass fiber surface, and improve the dispersibility of the glass fiber surface treatment agent, making it easier for resin and other particles to be dispersed evenly, preventing precipitation and agglomeration of the particles, and improving the stability of the liquid and the quality of the product. The inventor found through research that the amount of surfactant of 1.8~5.9% is more appropriate. If the amount of surfactant is too low, the coating effect of the glass fiber surface treatment agent on the glass fiber surface will be affected, and more fuzz will be generated during use, affecting production efficiency and the performance of FRP products; while too much surfactant will affect the formation of glass fiber strand packages, easily causing deformations such as ellipse, height increase, etc., resulting in difficulty in packaging and transportation and affecting the normal use of customers. In some preferred embodiments, the amount of the surfactant is preferably 2.8~5.1%, and more preferably 3.0~4.7%.

In order to further improve the processability of glass fiber and improve the physical and mechanical strength of composite materials, in some preferred embodiments, the silane coupling agent is an acyloxy-containing silane coupling agent and/or an amino-containing silane coupling agent. Preferably, the silane coupling agent is an acyloxy-containing low-VOC silane coupling agent and/or an amino-containing low-VOC silane coupling agent. More preferably, the acyloxy-containing low-VOC silane coupling agent is an acyloxy-containing water-based modified silane coupling agent; by way of example, the acyloxy-containing low-VOC silane coupling agent is Degussa silane coupling agent HYDROSIL 2929 and/or Degussa silane coupling agent HYDROSIL 2990, and the acyloxy-containing low-VOC silane coupling agent can also be γ - methacryloxypropyltrimethoxysilane coupling agent. More preferably, the amino-containing low-VOC silane coupling agent is an amino-containing water-based modified silane coupling agent; by way of example, the amino-containing low-VOC silane coupling agent is one or more of Degussa silane coupling agent HYDROSIL 1151, Degussa silane coupling agent HYDROSIL 1153, Degussa silane coupling agent HYDROSIL 2627, Degussa silane coupling agent HYDROSIL 2776, and Degussa silane coupling agent HYDROSIL 2909, and the amino-containing low-VOC silane coupling agent can also be N-(2-aminoethyl)-3-aminopropylmethyldimethoxysilane. The silane coupling agent of the present disclosure has good wettability on the surface of glass fiber and high reaction activity, and when it interacts with glass fiber, the alkoxy group at one end after hydrolysis of the silane coupling agent seizes the silanol group produced by the decomposition of glass fiber and water to form a chemical bond, forming a molecular layer covering the silane coupling agent on the surface of the glass fiber, repairing defects such as microcracks on the surface of the glass fiber. At the same time, the hydrolysis of the silane coupling agent will also generate another organic group that tends to the surface of the organic material, and undergoes a cross-linking and curing chemical reaction with the film-forming agent, thus completing the "bridge" process between the inorganic material (glass fiber) and the organic material (film-forming agent), ensuring the strength and wear resistance of the glass fiber. Specifically, the acyloxy group contained in the preferred acyloxy-containing low-VOC silane coupling agent molecule of the present disclosure is a functional group with a -O-C(=O)-CH₃ structure, which can undergo chemical cross-linking and physical entangling with the polymer molecule, ultimately well combining the glass fiber with other components of the treatment agent, thereby enhancing the flexibility and tensile strength of the material. The preferred amino-containing low-VOC silane coupling agent in the present disclosure is specifically a silane coupling agent containing two or more amino groups, whose molecular structure has two or more amino functional groups and two or more hydrolyzable alkoxy groups. The dual or multiple reactivity enables it to enhance the bonding, adhesion and compatibility between inorganic materials (glass) and organic polymers (thermosetting resins) through bidirectional chemical reactions, thereby improving the mechanical properties of resin-based composites or the bonding strength and water resistance of resin coatings. In some preferred embodiments, the amount of silane coupling agent in the present disclosure is preferably 7.9~18.2%, and more preferably 8.5~17.8%.

In some preferred embodiments, the silane coupling agent is a mixture of acyloxy-containing silane coupling agent and amino-containing silane coupling agent, the mass ratio of the acyloxy-containing silane coupling agent to the amino-containing silane coupling agent is 1:1~8:1. The combination of the acyloxy-containing silane coupling agent and the amino-containing silane coupling agent can produce a synergistic effect, resulting in high strength and long storage life of the treated glass fibers, good compatibility with the target resin, namely unsaturated polyester resin, which can significantly improve the mechanical properties of composite materials. However, since the amino-containing silane coupling agent is highly prone to yellowing reaction, the amount of the amino-containing silane coupling agent should not be too high and should not be higher than the amount of the acyloxy-containing silane coupling agent, otherwise it will affect the appearance quality of the glass fiber product. The amount of the amino-containing silane coupling agent cannot be too low either, otherwise the expected synergistic effect cannot be achieved. It is more appropriate when the mass ratio of the acyloxy-containing silane coupling agent to the amino-containing silane coupling agent is 1:1~8:1. Preferably, the mass ratio of the acyloxy-containing silane coupling agent to the amino-containing silane coupling agent is 1:1~6:1. In some specific embodiments, the mass ratio of the acyloxy-containing silane coupling agent to the amino-containing silane coupling agent is 1:1-4:1. By way of example, the mass ratio of the acyloxy-containing silane coupling agent to the amino-containing silane coupling agent is 1:1, 2:1, 3:1, 4:1, 5:1, 6:1, 1.39:1, 2.17:1, 2.22:1, 2.88:1, 2.57:1, 3.32:1.

In order to reduce the wear and damage of glass fibers during the production process, improve the reprocessability of glass fibers, and reduce the generation of fuzz, in some preferred embodiments, the lubricant is one or more of a fatty acid, a fatty alcohol, a fatty acid ester, and a fatty acid triglyceride; specifically, it is one or more of a saturated fatty acid, a unsaturated fatty acid, a hydroxy fatty acid, a higher saturated fatty alcohol, a glycerol carbonate fatty acid ester, and a C12-18 acid triglyceride. The above preferred lubricants in the present disclosure do not contain substances harmful to human health such as toxic substances, heavy metals, and harmful volatile compounds, and can reduce the frictional resistance, which is more conducive to improving the use process performance. In some preferred embodiments, the amount of the lubricant is preferably 4.2~6.9%, more preferably 4.5~6.3%.

In order to improve the dispersion of the silane coupling agent and achieve bactericidal and anti-mold effects, in some preferred embodiments, the auxiliary agent is a citric acid and/or an acetic acid. By way of example, the auxiliary agent can be a composition of acetic acid and citric acid. Those skilled in the art should control the amount of the auxiliary agent in the present disclosure. If the amount is too high, on the one hand, it may lead to the failure of some components in the glass fiber surface treatment agent, and on the other hand, it may cause acid corrosion to the glass fiber. However, if the amount is too low, the dispersion effect of the silane coupling agent and the bactericidal and anti-mold effects cannot be fully achieved. In some preferred embodiments, the amount of the auxiliary agent is preferably 3.8~5.9%, more preferably 4.0~5.5%.

Some embodiments of the present disclosure provide a preparation method of the above glass fiber surface treatment agent, including: mixing an auxiliary agent, a silane coupling agent, a surfactant, a lubricant, a film-forming agent and water to obtain the glass fiber surface treatment agent. Applying the glass fiber surface treatment agent prepared by the preparation method of the present disclosure to glass fiber, the glass fiber meets the requirements of ACS test certification, and has excellent use smoothness and mechanical properties of FRP, to meet the performance requirements of food grade FRP containers.

In some preferred embodiments, the preparation method of the glass fiber surface treatment agent includes:
1S: Adding water into a container, then adding the auxiliary agent, and stirring for 1~2 minutes, and then adding the silane coupling agent; continuing to stir for 10~30 minutes until the silane coupling agent is evenly dispersed, the aqueous solution is clear, and there are no oil beads on the surface;
2S: Diluting the surfactant with water and stirring evenly, and then adding it to the container;
3S: Diluting the lubricant with water and stirring evenly, and then add it to the container;
4S: Diluting the film-forming agent with water and stirring evenly, and then add it to the container;
5S: Adding the remainder of water to the container and stirring evenly.

In step 1S, it is preferred to add 25~40% of the total weight of the glass fiber surface treatment agent of water;

In step 2S, water at 50~60°C which is preferably 5~10 times the amount of surfactant is used to dissolve and dilute the surfactant;

In step 3S, water at 50~60°C which is preferably 2.3~3.3 times the amount of lubricant is used to dissolve and dilute the lubricant;

In step 4S, water at 15~25°C which is preferably 2~3 times the amount of film-forming agent is used to dilute the film-forming agent.

The above preparation methods are only for example. On the basis of not violating the aforementioned preparation method provided in the present disclosure, those skilled in the art can adjust the order of several steps or the parameters of specific steps according to the actual situation to obtain the corresponding glass fiber surface treatment agent.

Some embodiments of the present disclosure provide a glass fiber, which is obtained after being treated with the glass fiber surface treatment agent prepared by the aforementioned preparation method.

Some embodiments of the present disclosure provide use of the aforementioned glass fiber in the field of food grade fiberglass-reinforced plastic container products.

The following further describes the present disclosure in detail in conjunction with specific embodiments, and these embodiments should not be construed as limiting the scope claimed in the present disclosure.

### Examples 1~19

Table 1 records the formulations of Examples 1~19 and the performance test results of food grade FRP containers produced from the glass fiber products corresponding to Examples 1~19. Table 1 also records the performance test results of food grade FRP containers produced from the glass fiber products corresponding to Comparative Examples 1~2. The glass fiber surface treatment agents of Examples 1~19 and Comparative Examples 1~2 were applied to 2400 tex direct roving respectively, and the corresponding performance test results were obtained.

### Comparative Example 1

The glass fiber surface treatment agent includes effective components and water, the weight percentage of the effective components in the glass fiber surface treatment agent being 9.0%; and based on the weight percentage of the effective components, the effective components include:
Silane coupling agent: a combination of 3-aminopropyltriethoxysilane (2%) and γ-glycidol ether propyl trimethoxysilane (6%);
Lubricant: PEGMO (6%);
Surfactant: polyethyleneimine (2.5%);
Film-forming agent: unmodified water-based polyester resin (80.5%);
Auxiliary agent: citric acid (3%).

### Comparative Example 2

The glass fiber surface treatment agent includes effective components and water, the weight percentage of the effective components in the glass fiber surface treatment agent being 8.0%; and based on the weight percentage of the effective components, the effective components include:
Silane coupling agent: γ-glycidol ether propyl trimethoxysilane (16%);
Lubricant: epoxy-modified silicone oil emulsion (15%);
Film-forming agent: bisphenol A type epoxy resin emulsion (65%);
Auxiliary agent: glacial acetic acid (4%).

**TABLE 1**

| Components | | Example 1 | Example 2 | Example 3 | Example 4 | Example 5 | Example 6 | Example 7 |
|---|---|---|---|---|---|---|---|---|
| Silane coupling agent (%) | Acyloxy-containing silane coupling agent | 6.3 | 6.8 | 8.7 | 7.1 | 10.6 | 6.9 | 13.4 |
| | Amino-containing silane coupling agent | -- | 1 | -- | 2.4 | -- | 5 | -- |
| Surfactant (%) | Polyethylene oxide surfactant | 1.8 | -- | -- | -- | -- | 5.9 | 2.2 |
| | Ethoxylate surfactant | -- | 2.5 | -- | -- | 5.1 | -- | 1.3 |
| | Alkyne diol modified surfactant | -- | -- | 3.4 | 4.3 | -- | -- | -- |
| Lubricant (%) | Saturated fatty acid | 3.4 | -- | -- | -- | -- | -- | -- |
| | Unsaturated fatty acid | -- | 3.7 | -- | -- | -- | -- | -- |
| | Hydroxy fatty acid | -- | -- | 4.6 | -- | -- | -- | 4 |
| | Higher saturated fatty alcohol | -- | -- | -- | 5.2 | -- | -- | -- |
| | Glycerol carbonate fatty acid ester | -- | -- | -- | -- | 6.3 | -- | -- |
| | C12-18 acid Triglyceride | -- | -- | -- | -- | -- | 7.8 | 2 |
| Film-forming agent (%) | Acrylic-modified polyester resin | 84.8 | 83.1 | 79.6 | 76.9 | -- | -- | -- |
| | Silicone-modified polyester resin | -- | -- | -- | -- | 73.3 | 69.3 | 71.7 |
| Auxiliary agent (%) | Citric acid | 3.7 | 1.7 | -- | 2 | 4.7 | 3.6 | -- |
| | Acetic acid | -- | 1.2 | 3.7 | 2.1 | -- | 1.5 | 5.4 |
| Total proportion of solid content in the formula (%) | | 100 | 100 | 100 | 100 | 100 | 100 | 100 |
| Solid content of the glass fiber surface treatment agent (%) | | 4.6 | 5.4 | 5.8 | 6.5 | 6.9 | 7.5 | 7.7 |
| L.O.I. of the product | | 0.53 | 0.52 | 0.51 | 0.52 | 0.50 | 0.52 | 0.51 |
| Linear density of the product (tex) | | 2402 | 2398 | 2401 | 2399 | 2498 | 2400 | 2403 |
| Fuzz (mg/kg) | | 23 | 19 | 16 | 14 | 13 | 15 | 11 |
| Performance of FRP containers (unsaturated polyester resin) | Axial tensile strength of the pipe (MPa) | 66 | 67 | 67 | 68 | 69 | 71 | 69 |
| | Interlaminar shear strength (MPa) | 54 | 55 | 55 | 56 | 55 | 56 | 54 |

**TABLE 1-continued**

| Components | | Example 8 | Example 9 | Example 10 | Example 11 | Example 12 | Example 13 | Example 14 |
|---|---|---|---|---|---|---|---|---|
| Silane coupling agent (%) | Acyloxy-containing silane coupling agent | 7.3 | 16.1 | 10.3 | 16.3 | 19.6 | 6.8 | 9.3 |
| | Amino-containing silane coupling agent | 7.3 | -- | 7.4 | 2 | -- | 4 | 2.8 |
| Surfactant (%) | Polyethylene oxide surfactants | -- | 3 | 0.6 | 3.5 | 0.8 | 1.2 | -- |
| | Ethoxylate surfactants | 4.5 | -- | 1.7 | 0.8 | 4.1 | 2.7 | 2.5 |
| | Alkyne diol modified surfactant | 1.2 | 2.4 | 2.5 | 1.2 | 1 | -- | 1.3 |
| Lubricant (%) | Saturated fatty acid | -- | 1.5 | 1.1 | -- | 0.5 | 2.2 | -- |
| | Unsaturated fatty acid | 2.1 | -- | 1.3 | 3.8 | 1.8 | -- | 1 |
| | Hydroxy fatty acid | -- | -- | 0.8 | 0.5 | 0.7 | -- | -- |
| | Higher saturated fatty alcohol | -- | 4 | -- | -- | 1.4 | -- | 3 |
| | Glycerol carbonate fatty acid ester | 3 | -- | -- | 1.1 | 2.2 | 3 | -- |
| | C12-18 acid Triglyceride | -- | -- | -- | 1.5 | 0.8 | -- | 1.4 |
| Film-forming agent (%) | acrylic-modified polyester resin | 35.2 | -- | 58 | 21 | 17.2 | 39.4 | 25.1 |
| | Silicone-modified polyester resin | 33.8 | 67.2 | 10.3 | 42.1 | 43.5 | 36 | 48.8 |
| Auxiliary agent (%) | Citric acid | 1.4 | 5.8 | 3.9 | 1.6 | -- | 1.5 | 4.8 |
| | Acetic acid | 4.2 | -- | 2.1 | 4.6 | 6.4 | 3.2 | -- |
| Total proportion of solid content in the formula (%) | | 100 | 100 | 100 | 100 | 100 | 100 | 100 |
| Solid content of the glass fiber surface treatment agent (%) | | 8.2 | 8.7 | 9.1 | 9.6 | 10.3 | 9 | 8.9 |
| L.O.I. of the product | | 0.53 | 0.52 | 0.50 | 0.51 | 0.51 | 0.53 | 0.51 |
| Linear density of the product (tex) | | 2399 | 2399 | 2400 | 2401 | 2403 | 2402 | 2398 |
| Fuzz (mg/kg) | | 9 | 12 | 11 | 10 | 14 | 11 | 10 |
| Performance of FRP containers (unsaturated polyester resin) | Axial tensile strength of the pipe (MPa) | 70 | 68 | 72 | 69 | 67 | 69 | 70 |
| | Interlaminar shear strength (MPa) | 56 | 55 | 56 | 54 | 54 | 55 | 57 |

**TABLE 1-continued**

| Components | | Example 15 | Example 16 | Example 17 | Example 18 | Example 19 | Comparative Examples 1 | Comparative Examples 2 |
|---|---|---|---|---|---|---|---|---|
| Silane coupling agent (%) | Acyloxy-containing silane coupling agent | 10.2 | 8.3 | 9.5 | 10.8 | 9 | / | / |
| | Amino-containing silane coupling agent | 4.6 | 4.1 | 3.3 | 2.7 | 3.5 | | |
| Surfactant (%) | Polyethylene oxide surfactants | 0.6 | 1.6 | 0.8 | 1 | 0.9 | | |
| | Ethoxylate surfactants | 1.6 | - | 3 | 2.1 | 2.1 | | |
| | Alkyne diol modified surfactant | 1.8 | 2.7 | 0.6 | 0.5 | 1.3 | | |
| Lubricant (%) | Saturated fatty acid | 0.4 | 0.6 | 1.3 | -- | -- | | |
| | Unsaturated fatty acid | 2.1 | -- | -- | 1.3 | 2.1 | | |
| | Hydroxy fatty acid | 0.6 | 3.8 | 0.7 | -- | 1 | | |
| | Higher saturated fatty alcohol | 1.4 | -- | 1.1 | 3.5 | -- | | |
| | Glycerol carbonate fatty acid ester | 1.1 | -- | 0.7 | 1.3 | 2.5 | | |
| | C12-18 acid Triglyceride | -- | 1.5 | 2.3 | -- | -- | | |
| Film-forming agent (%) | Acrylic-modified polyester resin | 26.9 | 40.1 | 42 | 33.3 | 48 | | |
| | Silicone-modified polyester resin | 43.6 | 32.6 | 29.8 | 39 | 24.1 | | |
| Auxiliary agent (%) | Citric acid | 2.5 | 4.7 | 1.8 | 1.7 | 3 | | |
| | Acetic acid | 2.6 | -- | 3.1 | 2.8 | 2.5 | | |
| Total proportion of solid content in the formula (%) | | 100 | 100 | 100 | 100 | 100 | 100 | 100 |
| Solid content of the glass fiber surface treatment agent (%) | | 8.3 | 8.5 | 9.0 | 8.8 | 8.2 | 6.5 | 6.5 |
| L.O.I. of the product | | 0.5 | 0.52 | 0.51 | 0.52 | 0.51 | 0.56 | 0.49 |
| Linear density of the product (tex) | | 2401 | 2401 | 2403 | 2396 | 2397 | 2401 | 2402 |
| Fuzz (mg/kg) | | 12 | 10 | 10 | 12 | 11 | 54 | 60 |
| Performance of FRP containers (unsaturated polyester resin) | Axial tensile strength of the pipe (MPa) | 71 | 71 | 70 | 72 | 73 | 63 | 59 |
| | Interlaminar shear strength (MPa) | 58 | 56 | 59 | 57 | 59 | 50 | 52 |

In Examples 1 to 19, the acyloxy-containing silane coupling agent is Degussa silane coupling agent HYDROSIL 2929; the amino-containing silane coupling agent is Degussa silane coupling agent HYDROSIL 1151 (hydrolyzed product of 3-aminopropyltrialkoxysilane). In Examples 1 to 19, the fatty acid triglyceride is C12-18 acid triglyceride. In Examples 1 to 19, the polyethylene oxide surfactant is a derivative of polyethylene glycol, and the ethoxylated surfactant is an ethoxylated non-ionic surfactant; the alkyne diol modified surfactant is an alkyne diol polyoxyethylene ether. In Examples 1 to 19, the relative weight average molecular weight of the acrylic-modified polyester resin in the film-forming agent is 4100 ± 500, and the relative weight average molecular weight of the silicone-modified polyester resin is 2800 ± 500. In Examples 1 to 19, the acrylic-modified polyester resin is a water-based acrylic-modified unsaturated polyester resin; the silicone-modified polyester resin is a silicone-modified saturated polyester resin prepared by condensation dehydration reaction of siloxane containing SiOH and polyester resin containing hydroxy.

It can be seen from the data in Table 1 that compared with the glass fiber surface treatment agents of Comparative Examples 1-2, the glass fibers treated by the glass fiber surface treatment agent of the present disclosure (Examples 1 to 19) have less fuzz, and the FRP containers prepared from the glass fibers of the present disclosure have higher axial tensile strength of the pipe and interlaminar shear strength. In addition, the inventors also compare the glass fiber surface treatment agents of other comparative examples with the glass fiber surface treatment agent of the present disclosure (Examples 1 to 19). The film-forming agent and coupling agent used in other comparative examples are different from those of the present disclosure. Compared with the glass fiber surface treatment agent of Examples 1 to 19 of the present disclosure, the properties of the glass fibers and FRP containers prepared from the glass fiber surface treatment agents of other comparative examples are also significantly worse.

In summary, the formula and preparation process of the glass fiber surface treatment agent provided by the present disclosure are scientific and reasonable. The components in the glass fiber surface treatment agent cooperate with each other, giving full play to the advantageous characteristics of each component, and achieving more beneficial technical effects. The glass fiber treated by the glass fiber surface treatment agent of the present disclosure has excellent use smoothness and mechanical properties of FRP, and can pass the ACS test certification, meeting the performance requirements of food grade FRP containers.

The above are only the preferred embodiments of the present disclosure and are not intended to limit the present disclosure. For those skilled in the art, the present disclosure may have various changes and modifications. Any modification, equivalent replacement, improvement, etc. made within the spirit and principle of the present disclosure shall be included in the protection scope of the present disclosure.

### Industrial Applicability

The glass fiber surface treatment agent in the present disclosure selects acrylic-modified polyester resin and silicone-modified polyester resin as film-forming agent, which do not contain substances harmful to the human body such as ethylene oxide, and have stronger adhesion on the fiber surface, so that the glass fiber has excellent integrity, flexibility, weather resistance and water resistance; and at the same time has good compatibility with food grade unsaturated polyester resin and excellent solvent resistance, which can meet the performance requirements of food grade pipelines. According to the ratio of the present disclosure, combining a silane coupling agent, a surfactant, a lubricant, a film-forming agent, an auxiliary agent and water to prepare the glass fiber surface treatment agent, and applying it to glass fibers, the wear resistance, integrity of the glass fiber and mechanical properties of FRP are significantly better than those of the glass fibers treated with other glass fiber surface treatment agents; and the products can pass the ACS test certification and meet the performance requirements of food grade FRP containers.

## Claims

1. A glass fiber surface treatment agent, wherein comprising effective components and water, wherein the effective components account for 4.6~10.3% of the weight percentage of the glass fiber surface treatment agent; and based on the weight percentage of the effective components, the effective components include:
6.3~19.6% of a silane coupling agent, 1.8~5.9% of a surfactant, 3.4~7.8% of a lubricant, 60.7~84.8% of a film-forming agent, and 2.9~6.4% of an auxiliary agent;
wherein the film-forming agent is an acrylic-modified polyester resin and/or a silicone-modified polyester resin.

2. The glass fiber surface treatment agent according to claim 1, wherein the acrylic-modified polyester resin includes: a water-based acrylic-modified saturated polyester resin and/or a water-based acrylic-modified unsaturated polyester resin; wherein the relative weight average molecular weight of the acrylic-modified polyester resin is 3000~5000.

3. The glass fiber surface treatment agent according to claim 1, wherein the silicone-modified polyester resin includes: a silicone-modified saturated polyester resin and/or a silicone-modified unsaturated polyester resin; wherein the relative weight average molecular weight of the silicone-modified polyester resin is 2000~4000.

4. The glass fiber surface treatment agent according to claim 1, wherein the film-forming agent is a mixture of the acrylic-modified polyester resin and the silicone-modified polyester resin, wherein a mass ratio of the acrylic-modified polyester resin to the silicone-modified polyester resin is 1:3~6:1.

5. The glass fiber surface treatment agent according to claim 1, wherein the surfactant is one or more of a polyethylene oxide surfactant, an ethoxylate surfactant, and an alkyne diol modified surfactant.

6. The glass fiber surface treatment agent according to claim 1, wherein the silane coupling agent is an acyloxy-containing silane coupling agent and/or an amino-containing silane coupling agent.

7. The glass fiber surface treatment agent according to claim 1, wherein the silane coupling agent is a mixture of an acyloxy-containing silane coupling agent and an amino-containing silane coupling agent, and a mass ratio of the acyloxy-containing silane coupling agent to the amino-containing silane coupling agent is 1:1~8:1.

8. The glass fiber surface treatment agent according to claim 1, wherein the silane coupling agent is an acyloxy-containing low-VOC silane coupling agent and/or an amino-containing low-VOC silane coupling agent.

9. The glass fiber surface treatment agent according to claim 1, wherein the lubricant is one or more of a fatty acid, a fatty alcohol, a fatty acid ester and a fatty acid triglyceride.

10. The glass fiber surface treatment agent according to claim 1, wherein the auxiliary agent is a citric acid and/or an acetic acid.

11. A preparation method of the glass fiber surface treatment agent as claimed in any one of claims 1 to 10, comprising: mixing the auxiliary agent, the silane coupling agent, the surfactant, the lubricant, the film-forming agent and water to obtain the glass fiber surface treatment agent.

12. A glass fiber treated by the glass fiber surface treatment agent prepared by the preparation method according to claim 11.

13. Use of the glass fiber according to claim 12 in the field of food grade fiberglass-reinforced plastic container products.
